# EUROPEAN PATENT APPLICATION

(11) **EP 4 814 673 A2**
(43) Date of publication of application: **30.09.2026**
(21) Application number: 26190189.6
(22) Date of filing: 17.03.2022
(51) Int. Cl.: G06F 3/044

(54) **AEROSOL GENERATION DEVICE WITH AN IMPROVED ILLUMINATION ARRANGEMENT**

(30) Priority: 17.03.2021 EP 21163115
(62) Document number(s) of the earlier application(s) in accordance with Art. 76 EPC: 22715088.5 / 4 307 936
(71) Applicant: JT International S.A., 1202 Genève (CH)
(72) Inventor: LAKRAA, Karima, 1003 Lausanne (CH)
(74) Representative: Bardehle Pagenberg Partnerschaft mbB Patentanwälte Rechtsanwälte

(57) **Abstract**

The invention relates to an aerosol generation device, in particular to an aerosol generation device comprising: a main body with a main housing; a touch area for detecting a touch operation, that forms part of the main housing, wherein the touch area comprises a capacitive layer with capacitive cells, for detecting a touch operation on the touch area, wherein at least a portion of the capacitive layer is translucent or preferably transparent to light; an LED; and a light guide arranged in an area, that extends orthogonally from the touch area, and connected to the LED such that light emitted from the LED propagates through the light guide and further through the touch area.

## Description

### TECHNICAL FIELD

The present invention is directed to an aerosol generation device. More specifically, the present invention is directed to an aerosol generation device with an LED, a light guide and preferably a transparent conductive layer for detecting user inputs, wherein the light guide is connected to the LED and the transparent conductive layer. Furthermore, the light emitted by the LED may propagate through the light guide and further through the transparent conductive layer towards the outer layer of the device.

### BACKGROUND

An aerosol generation device, or E-cigarette, is now a mainstream product to simulate a traditional tobacco cigarette. There are many types of aerosol generation devices, and the one which still has tobacco or volatile substrate inside is one of the most popular types. By heating but not burning the consumable, this one type of the aerosol generation device does not release the by-products of combustion such as tar and carbon monoxide. The operation method of the aerosol generation device is to contain an aerosol generation carrier inside and to heat it, but not to its burning point. There is also another type of E-cigarette, the operation method of which is to evaporate liquid to form smoke.

A pleasant smoking experience is desired for the user. In addition, there is a desire to offer a variety of functional features for the user, such as an illumination feedback when the user performs an action, like pressing a button or inhaling the aerosol. The features have to be implemented while still keeping a compact, elaborate, portable and easy-to-use design. Since space inside the device is limited, an efficient arrangement of the components is crucial to meet the design requirements.

The current aerosol generation devices are usually arranged with LEDs having gaps between the housing of the device and the LEDs embedded in the housing, which makes the devices vulnerable for, for example, wet air, dust, liquids in daily life, and bits from the consumable. There is also a desire to improve the implementation of an LED arrangement and prevent it from taking damage during use.

### SUMMARY OF THE INVENTION

The present invention provides a touch area arrangement for an aerosol generation device, which solves some of or all the above problems.

A 1st embodiment of the invention is directed to an aerosol generation device comprising: a main body with a main housing; a touch area for detecting a touch operation, that forms part of the main housing, wherein the touch area comprises a capacitive layer with capacitive cells provided for detecting a touch operation on the touch area, wherein at least a portion of the capacitive layer is translucent or preferably transparent to light; an LED; and a light guide that is arranged in an area that extends orthogonally from the touch area, and is connected to the LED such that light emitted from the LED propagates through the light guide and further through the touch area.

By using a light guide, the LED may be positioned at a distance to the outer layer and/or to the capacitive layer, thereby facilitating the arrangement of components inside the aerosol smoking device, as special constraints posed by the positioning of the LED and the components powering the LED are reduced. Thus, a compact, portable, and easy-to-use design is possible. Also, by removing the LED and the light guide from the outer surface of the device and placing the components below the touch area, the LED is protected from detrimental influences such as water, physical impact, or electromagnetic interference.

According to a 2nd embodiment, in the preceding embodiment, the light guide has a tubular shape and connects to the translucent or preferably transparent portion of the capacitive layer in longitudinal direction.

This arrangement allows to position the energy source of the LED and/or the LED with a distance of the length of the light guide from the capacitive layer. Furthermore, by using a tubular shape, the space below the touch area that is required to provide an illumination feature for the user is reduced. This allows to position the components of the aerosol generation device more freely, thus reducing spatial constraints within the device.

According to a 3rd embodiment, in the preceding embodiments, the through area of the light guide has a size between 100% and 600%, preferably between 100% and 300% of the size of the surface of the LED directed towards the light guide.

By using a light guide that has a larger through area than the LED (but still in the magnitude of the LED), large amounts of the light from the LED are collected while the size of the light guide remains small. Again, this allows to position the components of the aerosol generation device more freely and thus reduces special constraints.

According to a 4th embodiment, in the preceding embodiments, the LED is not visible through the translucent or preferably transparent portion when the LED is not emitting light.

With the above, a more elaborate design of the aerosol generation device can be achieved. It allows to place the LED at numerous positions within the device, without influencing the appearance of the aerosol generation device.

According to a 5th embodiment, in the preceding embodiments, the LED is configured to emit light in response to a touch input of the user on the touch area.

With the above, an action of a user to the touch area may trigger the LED and thus provide a feedback to the user that the device has detected the action or is performing an action triggered by the user. Thereby, the operability of the device is improved.

According to a 6th embodiment, in the preceding embodiments, the light guide comprises one or more bent portions.

The above allows to reduce special constraints within the device even further. By implementing a light guide with bent portions, components may be placed between the transparent portion of the capacitive layer and the LED, as the light guide may "meander" around the components.

According to a 7th embodiment, in the preceding embodiments, at least a portion of, or preferably substantially the entire light guide is arranged perpendicular to the capacitive layer.

Arranging the light guide below the capacitive layer improves the accessibility and simplifies manufacturing, when compared to arranging the light guide elsewhere.

According to a 8th embodiment, in the preceding embodiments, the light guide is arranged such that a portion of the light guide is arranged in an area that extends orthogonally from the translucent or preferably transparent portion of the capacitive layer; and a portion of the light guide is arranged in an area that extends orthogonally from an opaque portion of the capacitive layer.

By allowing a portion of the light guide to be positioned below the transparent portion and a portion of the light guide to be positioned below the opaque region, the light guide is not limited to being placed below the transparent portion, but may extend from any position within the aerosol generation device. This allows to position the LED at arbitrary positions within the aerosol generation device and does not require the LED/PCB to be placed below the transparent portions. Thereby, spatial constraints within the device are further decreased. For example, the thickness of the device can be reduced, and very flat designs are possible, as the LED does not need to be positioned below the capacitive layer but may be positioned in any free space of the device.

According to a 9th embodiment, in the preceding embodiment, the portion of the light guide which is arranged in an area that extends orthogonally from the translucent or preferably transparent portion is arranged in parallel to the capacitive layer.

With the above, while the light guide extends in parallel to the capacitive layer, the light guide can also be connected to the transparent portion in lateral direction of the light guide. Thereby, even more options to arrange the light guide and the LED within the aerosol generation device are provided, thus further reducing spatial constraints.

According to a 10th embodiment, in the preceding embodiments, the light guide comprises an angular portion which is arranged such that it forms an angle with the capacitive layer between 10° and 80°, preferably between 20° and 70°.

By implementing an angular portion, the design options for the aerosol generation device increase, as even more possibilities to arrange the light guide and the LED within the aerosol generation device are provided.

According to an 11th embodiment, in the preceding embodiments, the capacitive layer comprises engraved portions for collecting light passing through the capacitive layer.

With the above, the illumination perceived by the user is not provided by the light guide itself but by engravings within the capacitive layer that collect the light emitted from the light guide. With this, one light guide may illuminate several engravings and therefore may create multiple illuminated portions that are perceived by the user. Furthermore, it is not required anymore to position the light guide directly below the transparent portion, but the light guide may also illuminate the engravings from the side or any other position within the device. Thereby, special requirements for the illumination feature are reduced even further.

According to a 12th embodiment, in the preceding embodiments, the aerosol generation device comprises multiple LEDs with corresponding multiple light guides.

By implementing multiple LEDs, more complex indications may be provided for the user. Furthermore, multiple LEDs may be illuminated synchronously. For example, one LED could indicate the power status, another LED that heating is performed and a third LED that a user action has been detected.

According to a 13th embodiment, in the preceding embodiments, a silkscreened layer is arranged in the touch area to create opaque portions in the touch area.

According to the above, a silkscreened layer can be used to create the opaque portions in the touch area. This allows using transparent material for the touch area while being able to hide certain portions and/or creating a certain coloring, to allow for a more elaborate design. Furthermore, manufacturing methods related to silkscreen are well known, and using a silkscreened layer for the opaque regions facilitates the overall manufacturing process of the present invention.

According to a 14th embodiment, in the preceding embodiments, the touch area comprises an outer layer which is translucent or preferably transparent to light.

When using opaque outer layer materials, a cutout for a light guide must normally be provided in the outer layer, so that either the light guide can be placed into the cutout or a transparent material is placed into the cutout. By using a translucent or transparent touch area, the light guide can be connected to the inner side of the touch area, rendering the cutout obsolete. This simplifies the manufacturing process and protects the light guide (and the LED which is connected to the light guide) from damage and other influences from outside the device.

According to a 15th embodiment, in the preceding embodiment, the outer layer comprises or preferably is made of translucent or preferably transparent material such as PET or glass, to which the opaque silkscreened layer is attached, thereby hiding components on the inside of the aerosol generation device.

By introducing a silkscreened layer to the transparent/translucent touch area, the electronics and interior parts of the aerosol generation device can be hidden. Therefore, only parts that are supposed to be seen by the outside of the aerosol generation device are shown. This facilitates the illumination of only certain parts of the housing of the aerosol generation device.

According to a 16th embodiment, in the preceding embodiments, the light guide is configured to be deformable or preferably to be elastic.

When using a deformable or elastic light guide, the manufacturing process of the device is facilitated. In particular, if inaccuracies occur during the manufacturing process, damaging the light guide or the LED is prevented.

According to a 17th embodiment, in the preceding embodiments, the light guide is arranged such that it extends through the capacitive layer, or preferably extends through the capacitive layer and the outer layer.

With the above, the light guide may be integrated into the outer layer or may at least directly connect to the outer layer. This provides for a stronger illumination effect to the user. Furthermore, it allows to use an opaque material for the capacitive layer and the outer layer, wherein the outer layer may only comprise an opaque material if the light guide extends through the outer layer.

### BRIEF DESCRIPTION OF THE DRAWINGS

- Figure 1:: is an illustration of the aerosol generation device;
- Figure 2:: is a cross-sectional view of the aerosol generation device in a first embodiment;
- Figure 3:: is a cross-sectional view of the aerosol generation device in a second embodiment;
- Figure 4:: is a cross-sectional view of the aerosol generation device in a third embodiment;
- Figure 5:: is a cross-sectional view of the aerosol generation device in a fourth embodiment.

### DETAILED DESCRIPTION OF THE PREFERRED EMBODIMENTS

Preferred embodiments of the present invention are described hereinafter and in conjunction with the accompanying drawings.

As used herein, the term "aerosol generation device" or "electronic cigarette" may include an electronic cigarette configured to deliver an aerosol to a user, including an aerosol for smoking. "Printed circuit board" or "PCB" are well-known terms for the skilled person, which supports and uses etched conductive tracks (trace, lines), pads and other features, to electrically connect electrical or electronic components. Herein, "PCB" may also mean Printed Circuit Board Assembly (PCBA), which means the substrate of the PCB board and the components thereon. The illustrated embodiments of the aerosol generation system and the PCB therein are schematic, and it is also possible to combine some of the parts to single units or elements, which will be apparent to a person skilled in the art.

Herein, "connected" may mean "electronically and/or electrically coupled" or "electronically and/or electrically connected", wherein the connection may be via other components such as transistors or capacities for purposes known to the skilled person.

Where the term "transparent" is used herein, it has the meaning of "translucent or preferably transparent".

It should be understood that the terms "one end", "the other end", "outer side", "upper", "above", "inner side", "under", "below", "horizontal", "coaxial", "central", "end" "part", "length", "outer end" etc., which indicate the orientation or positional relationship, are based on the orientation or positional relationship shown in the drawings. The terms such as "upper", "above", "below", "under" and the like used in the present invention to indicate a relative position in space are used for the purpose of facilitating explanation to describe a unit or feature shown in the drawings relative to the relationship of another unit or feature. The term of the relative position in space may be intended to include different orientations of the device in use or operation other than those shown in the figures. For example, if the device in the figure is turned over, the unit described as being "below" or "under" other units or features will be "above" the other units or features. Therefore, the exemplary term "below" can encompass both the above and below orientations. The device can be oriented in other ways (rotated by 90 degrees or other orientations), and the space-related descriptors used herein are explained accordingly. More specifically, the word "above" means that one unit or element is arranged or configured relatively in an exterior direction of the device towards the (an)other unit(s) or element(s); the word "below" means that one unit or element is arranged or configured relatively in an interior direction of the device towards the other units or elements.

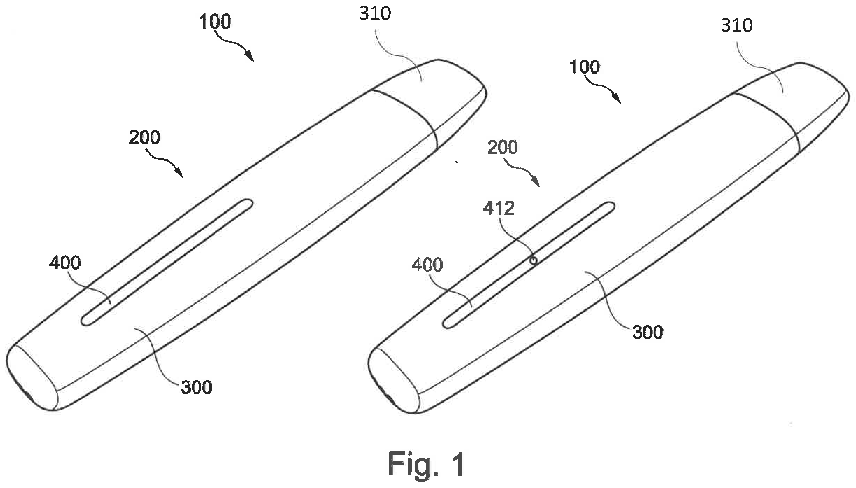

Figure 1 shows a schematic view of an aerosol generation device (100). The aerosol generation device (100) has an elongated shape, preferably a substantially cuboid shape. The device (100) comprises a main body (200) with a main housing (300) and a mouthpiece (310). The user may draw on the mouthpiece (310) to inhale a consumable smoking aerosol.

A cartridge (not shown) may be inserted in (or attached to) the device (100), containing the consumable, which is in the form of a liquid. The liquid can be inhaled by a user drawing at the mouthpiece 130 with the power support of the device (100). The liquid typically comprises an aerosol-forming substance, such as glycerin or propylene glycol that creates the vapor. Other common substances in the liquid are nicotine and various flavorings.

A chassis (not shown) is included within the main body (200). A cartridge socket integrated with the internal chassis is configured to hold and electronically/electrically connect or heat a cartridge at the cavity end. The electric power is transmitted from a preferably LiPo battery through a PCBA to the cartridge socket, which are all electrically connected with each other. The LiPo battery can be charged through a USB port. The PCBA, the LiPo battery, and the USB port are mounted together on the inner chassis and comprised by the main housing (300).

The main housing (300) further comprises a touch area (400) that is integrated into the main housing (300). The touch area (400) is either a part of the main housing (300) or placed into a recessed portion or a cutout portion of the main housing (300). In the embodiment of Figure 1, the touch area (400) is arranged flush into the main housing (300) without a groove, such that a user cannot feel the perimeter of the touch area (400).

In another embodiment, the touch area (400) is integrated into the main housing (300), such that a groove is created between the touch area (400) and the main housing (300), which the user can feel. The touch area (400) may also be embedded into the main housing (300), so that the touch area (400) and the main housing (300) form a dip. In another embodiment, the touch area (400) may be placed in a way such that it extends from the surface of the main housing (300), so that a user is able to feel the touch area (400), as it extends further out than the main housing (300). Furthermore, the main housing (300) may be one part or may comprise several modular parts that are connected to each other and form the main housing (300).

In the embodiment of Figure 1, the touch area (400) further comprises a transparent portion (412). The transparent portion (412) may have a substantially circular shape or another geometric form. The size of the transparent portion (412) can be anything between a few microns up to the total size of the touch area (412). In other words, the touch area (412) may also be transparent.

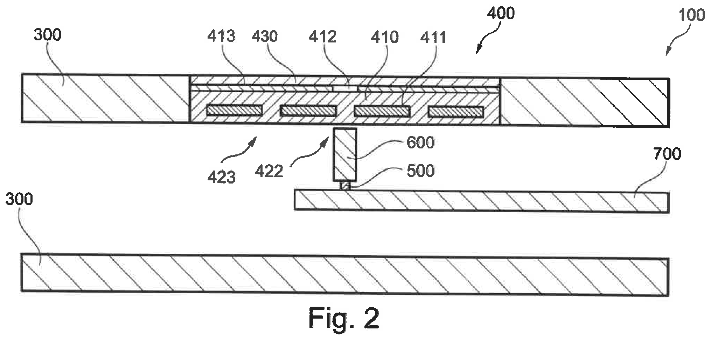

Figure 2 shows a partial, cross-sectional view of the touch area (400) in the main housing (300). In this embodiment, the device comprises one LED (500) and a light guide (600) corresponding to the LED (500).

Light guides (600) are light transferring structures that are characterized in that light can enter and exit the light guide (600) substantially only at specific positions. Light guides (600) generally consist of a core comprising a material with a relatively high refractive index and a shell with a relatively low refractive index. The light guide (600) may also comprise multiple materials that are arranged according to their refractive indices such that the refractive indices decrease from the core to the shell towards the circumference of the light guide (600). Exemplary light guide materials are glass or acrylic class (PMMA).

In the exemplary embodiment of Figure 2, the light guide (600) has a tube-like shape. Here, the light emitted from the LED (500) enters the light guide (600) in longitudinal direction. Due to this arrangement, the angle at which the light hits the side walls of the light guide (600) is relatively high. Due to the refractive index drop at the surface of the light guide (600) (medium surrounding the light guide (600) has a relatively low refractive index), the light propagating though the light guide (600) is reflected at the side walls of the light guide (600). The light can exit the light guide (600) substantially only at the end in longitudinal direction of the light guide (600), where the angle of incidence of the transmitted light is low. This allows to efficiently transfer light from an LED (500) over the length of the light guide (600).

In the embodiment shown in Figure 2, the touch area (400) has a layered structure with an outer layer (430). The outer layer (430) may comprise a transparent material, such as PET, glass, or other known transparent materials applicable for a touch interface. A silkscreened layer (420) comprising opaque material is arranged below the outer layer (430) to create opaque portions (413). In this example, the touch area (400) has a relatively small transparent region (412), when compared to the opaque portions (413) of the touch area (400). The opaque portions (413) are used to hide the inner parts of the device (100) such as a capacitive layer (410), which is arranged adjacent to, and below the silkscreened layer (420).

The capacitive layer (410) is configured to detect touch inputs performed by a user. For that, the capacitive layer comprises one or more touch cells (411). The one or more touch cells (411) comprise any material which can be used for capacitive sensing. Example materials are copper, indium tin oxide (ITO) and printed ink. The choice of material for the capacitive layer (410) itself is not restricted in this manner. It usually comprises a transparent material; however, it can also comprise an opaque material. Example materials are PET, PP, PVC, PMMT, glass, FM4 and Flex. In the exemplary embodiment, more than one capacitive cell (411) are used. This allows to detect more complex inputs, such as touch inputs comprising movement, for determining touch gestures.

In the embodiment shown in Figure 2, the LED (500) is connected to, and powered by the PCB (700). The LED (500) may be illuminated whenever the device (100) is switched on, or when it is performing an action, such as changing a mode or heating the liquid. The actions may be triggered automatically by executing a program on the PCB (700), or by a user that performs an action at the touch area (400) or draws on the mouthpiece (310).

The light guide (600) is arranged between the LED (600) and the capacitive layer (410) and forms a light-conducting connection to both the LED (600) and the capacitive layer (410). The light-conducting connection may be formed by touching the LED (500) and the capacitive layer (410) or with a gap between the light guide (600) and the LED (500) and/or the capacitive layer (410). In both cases, the light guide (600) is arranged such that it is illuminated by the LED (500) and transfers the light towards the capacitive layer (410).

In the embodiment of Figure 2, the light guide (600) is arranged perpendicular to the capacitive layer (410) in an area (422) that extends orthogonally from the transparent portion (412). In the following, for simplicity, the "*area (422) that extends orthogonally from the transparent portion (412)*" will be referred to as the "*area below the transparent portion (422)*". The light guide (600) transfers the light from the LED (500) through the transparent capacitive layer (410) towards the outer layer (430). In this embodiment, the outer layer (430) is transparent.

With this arrangement, the light emitted by the LED (500) is transmitted to the outer surface of the device (100), where it is perceived by the user.

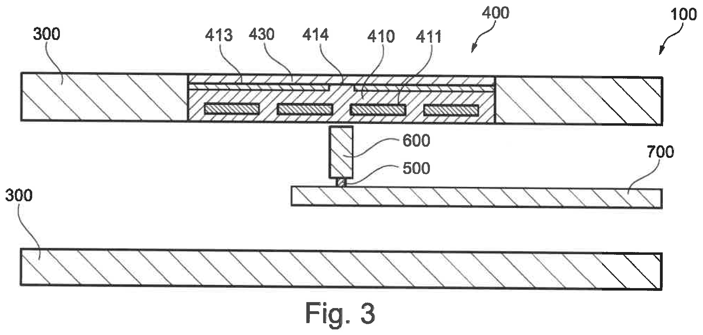

Figure 3 shows another embodiment of the device 100, similar to the embodiment of Figure 2. In Figure 2, the opaque portions were created by applying the opaque silkscreened layer (420) to portions of the transparent outer layer (430). The transparent portions (412) were all portions of the outer layer (430) without silkscreened layer 420 applied thereto. In contrast, in Figure 3, the transparent portion (412) is formed by the capacitive layer (410). Here, the capacitive layer (410) protrudes towards the transparent outer layer (430) of the device (100) to form a protruding portion (414). The protruding portion (414) of the capacitive layer (410) forms a light-conducting connection with the outer layer (430). The silkscreened layer (420) is added to the regions around the protruding portion (414), as indicated in Figure 3.

Even though the design of the embodiment of Figure 3 is slightly different from the embodiment of Figure 2, the functionality is similar.

The LED (500) is illuminated by the PCB (700), which provides the electrical power to the LED (500). The illumination of the LED (500) is triggered by a program that is executed on the PCB (700) or by an action performed by the user, such as drawing on the mouthpiece (310), or performing an action at the touch area (400). The light of the LED (500) then propagates through the light guide (600), which forms a light-conductive connection to the LED (500) and the capacitive layer (410). The light guide (600) is arranged in the area below the transparent portion (422), perpendicular to the capacitive layer (410). As described above, due to the design of the light guide (600), most of the light emitted from the LED (500) reaches the capacitive layer (410).

In the embodiment of Figure 3, the capacitive layer (410) is transparent to light. Therefore, the light can propagate from the light guide (600) through the capacitive layer (410), through the transparent portion (414) and further through the transparent outer layer (430). Thereby, it provides an indication for the user of the device (100).

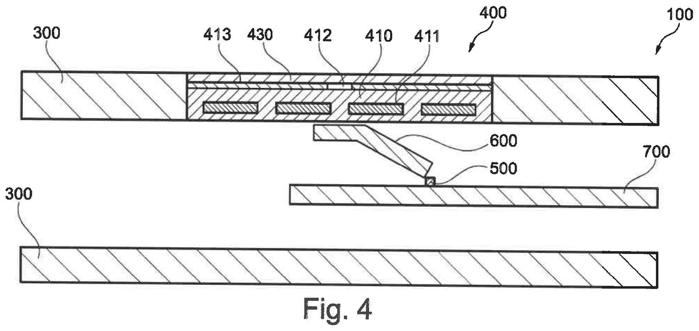

Figure 4 shows a cross-sectional view of the touch area (400) of another embodiment of the device 100. In this embodiment, the light guide (600) comprises at least one bent portion.

According to the exemplary embodiment of Figure 4, the LED (500) is not placed directly below the transparent portion (412). To provide an illumination effect for the user, the light guide (600) extends from the LED (500) towards the transparent portion (412) of the touch area (400). Unlike in the previous embodiments, the light guide is not perpendicular to the capacitive layer (410) but is arranged with an angle between 0° and 90°, preferably between 10° and 80° and more preferably between 20° and 70° to the capacitive layer (410). The light guide (600) further comprises a bent portion, such that the portion of the light guide (600) that is arranged in the area below the transparent portion (422), and forms a light-conducting connection with the capacitive layer (410), can be arranged in parallel to the capacitive layer (410), as shown in Figure 4.

In another exemplary embodiment, the light guide (600) may be arranged such that the portion that forms a light-conducting connection with the capacitive layer (410) is perpendicular to the capacitive layer (410).

The arrangement of Figure 4 comprises a light guide (600) with only one bent portion. However, in another embodiment, the light guide (600) may comprise multiple bent portions. For example, the light guide (600) may comprise two portions that are perpendicular to the capacitive layer (410) and form an "S"-shape (e.g. a shape similar to a graph that resembles the equation y = x³) to transport the light transmitted from the LED (500) to the surface of the touch area (400).

The above embodiments allow to use light guides (600) in any desired form and shape. Depending on the space requirements dictated by the arrangement of internal parts of the device (100), the light guide (600) may "meander" through the device (100) to provide illumination at the surface of the device (100), even if the PCB with the LED (500) is placed at a remote location within the device (100).

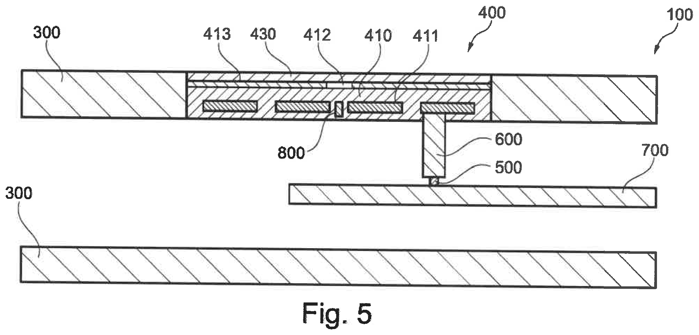

Figure 5 shows a cross-sectional view of the touch area (400) of another exemplary embodiment of the invention. In this embodiment, the light guide (600) does not need to form the light-conducting connection with the conductive layer (410) in the area below the transparent portion (422), but can form the light-conductive connection at another portion of the capacitive layer (410). Figure 5 shows an example where the light-conductive connection is formed in an area below the opaque portion (423).

In this example, the capacitive layer (410) further comprises one or more engravings (800) configured to collect light passing through the capacitive layer (410). The engraving (800) of Figure 5 may be a cavity that has been lasered into the capacitive layer (410). Other known methods for creating engravings (800) in transparent materials, such as drilling, or etching may also be used.

In the embodiment of Figure 5, the light guide (600) is connected to the capacitive layer (410) and forms the light-conducting connection. The light from the light guide (600) propagates through the capacitive layer (410) and is collected in the cavities of the engravings (800) and illuminates the engravings (800). Since the engravings (800) are positioned below the transparent area (412), the user of the device (100) sees the illumination through the transparent portion (412).

With this arrangement, it is not required to connect the light guide (600) to the capacitive layer (410) in the area below the transparent portion (422). Thereby even more freedom is gained, when designing the interior of the device and positioning the PCB (700) and/or the LED (500).

In addition to the embodiments that were mentioned with reference to the Figures 1 to 5, other arrangements are possible.

For example, the light guide (600) may directly connect to the outer layer (430), or even extend through the outer layer (430), and it may also extend into either of the capacitive layer (410) or the outer layer (430). If the light guide (600) extends through the outer layer (430), it is preferred that the light guide (600) is connected in a flush or substantially flush manner. In this case, the capacitive layer (410) may comprise an opaque material. If the light guide (600) extends through the outer layer (430), the outer layer (430) may comprise an opaque material.

Furthermore, in the previous embodiments, the PCB (700) was arranged in parallel to the touch area (400). However, the PCB (700) may also be arranged perpendicular or in any other positional relationship to the touch area (400). In fact, one benefit of the arrangements discussed in the previous embodiments is that they allow to place the PCB (700) or the LEDs (500) in any desired positional relationship to the touch area (400).

As mentioned above, the capacitive layer (410) and/or the outer layer may also comprise opaque material. In this case, the silkscreened layer (420) is not needed, and the opaque portions (413) are created by the outer layer (430) (and/or by the capacitive layer (410), respectively). If the outer layer (430) comprises of opaque material, the light guide (600) may have to extend through the outer layer (430). If the capacitive layer (410) comprises of opaque material, the light guide (600) may have to at least extend through the capacitive layer (410).

In the embodiments described above, the light guide (600) enters or connects to the touch area (400) from below. However, the light guide (600) may also enter the touch area (400) from the side or diagonally. Especially the embodiment of Figure 5 allows the light guide (600) to enter or connect to the touch area (400) from the side or diagonally, as only the engravings (800) need to be illuminated for the user to perceive the illumination of the LED (500).

The light guide (600) may also have a string-like shape or any other geometrical shape that allows the light guide (600) to be deformable or more preferably to be elastic. This facilitates the manufacturing of the light guide (600) arrangement, as it allows to "meander" the light guide (600) around components and prevents damage due to manufacturing inaccuracies. In particular, if stress is applied to a deformable or an elastic light guide (600) during the manufacturing of the device (100), the light guide (600) can deform or move to reduce tension and avoid damage to either the light guide (600), the touch area (400) or the LED (500).

The above embodiments are not limited to what is described in each of the embodiments individually, but combining the embodiments is also possible.

### LIST OF REFERENCE SIGNS USED

- 100: aerosol generating device
- 200: main body
- 300: main housing
- 310: mouthpiece
- 400: touch area
- 410: capacitive layer
- 411: capacitive cells
- 412: transparent portion
- 413: opaque portion
- 414: protruding portion
- 420: silkscreened layer
- 422: area below transparent portion
- 423: area below opaque portion
- 430: outer layer
- 500: LED
- 600: light guide
- 700: PCB
- 800: engraving

### Further embodiments

1. An aerosol generation device (100) comprising:
   - a main body (200) with a main housing (300);
   - a touch area (400) for detecting a touch operation, that forms part of the main housing (300), wherein
      the touch area (400) comprises a capacitive layer (410) with capacitive cells (411), for detecting a touch operation on the touch area (400), wherein at least a portion (412) of the capacitive layer (410) is translucent or preferably transparent to light;
   - an LED (500); and
   - a light guide (600) arranged in an area (422), that extends orthogonally from the touch area (400), and connected to the LED (500) such that light emitted from the LED (500) propagates through the light guide (600) and further through the touch area (400).
2. The aerosol generation device (100) of embodiment 1, wherein the light guide (600) has a tubular shape, and connects to the translucent or preferably transparent portion (412) of the capacitive layer (410) in longitudinal direction of the light guide.
3. The aerosol generation device (100) of any one of the preceding embodiments, wherein the through area of the light guide (600) has a size between 100% and 600% preferably between 100% and 300% of the size of the surface of the LED (500) directed towards the light guide (600).
4. The aerosol generation device (100) of any one of the preceding embodiments, wherein the LED (500) is not visible through the translucent or preferably transparent portion (412) when the LED (500) is not emitting light.
5. The aerosol generation device (100) of any one of the preceding embodiments, wherein the LED (500) is configured to emit light in response to a touch input of the user on the touch area (400).
6. The aerosol generation device (100) of any one of the preceding embodiments, wherein the light guide (600) comprises one or more bent portions.
7. The aerosol generation device (100) of any one of the preceding embodiments, wherein at least a portion of or preferably substantially the entire light guide (600) is arranged perpendicular to the capacitive layer (410).
8. The aerosol generation device (100) of any one of the preceding embodiments, wherein the light guide (600) is arranged such that a portion (610) of the light guide is arranged in the area (422) that extends orthogonally from the translucent or preferably transparent portion (412) of the capacitive layer (410); and a portion (620) of the light guide (600) is arranged in an area (423) that extends orthogonally from an opaque portion (413) of the capacitive layer (410).
9. The aerosol generation device (100) of embodiment 8, wherein the portion (610) of the light guide (600) which is arranged, in the area (422) that extends orthogonally from the translucent or preferably transparent portion (412) is arranged in parallel to the capacitive layer (410).
10. The aerosol generation device (100) of any one of the preceding embodiments, wherein the light guide (600) comprises an angular portion which is arranged such that it forms an angle with the capacitive layer (410) between 10° and 80°, preferably between 20° and 70°.
11. The aerosol generation device (100) of any one of the preceding embodiments, wherein the capacitive layer (410) comprises engraved portions (800) for collecting light passing through the capacitive layer (410).
12. The aerosol generation device (100) of any one of the preceding embodiments, comprising multiple LEDs (500) with corresponding one or more multiple light guides (600).
13. The aerosol generation device (100) of any one of the preceding embodiments,
   wherein the touch area (400) comprises an outer layer (430) which is translucent or preferably transparent to light;
   wherein an opaque silkscreened layer (420) is arranged in the touch area (400) to create the opaque portions (413) in the touch area (400).
14. The aerosol generation device (100) of any of the preceding embodiments, wherein the light guide (600) is configured to be deformable or preferably to be elastic.
15. The aerosol generation device (100) of any of the preceding embodiments, wherein the light guide (600) is arranged such that it extends through the capacitive layer (410), or preferably extends through the capacitive layer (410) and the outer layer (410).

## Claims

1. An aerosol generation device (100) comprising:
- a main body (200) with a main housing (300);
- a touch area (400) for detecting a touch operation, that forms part of the main housing (300), wherein the touch area (400) comprises a capacitive layer (410) with capacitive cells (411), for detecting a touch operation on the touch area (400), wherein at least a portion (412) of the capacitive layer (410) is translucent or preferably transparent to light;
- an LED (500); and
- a light guide (600) positioned between the touch area (400) and the LED (500), configured to receive and direct light from the LED (500) to the touch area (400).

2. The aerosol generation device (100), wherein the light guide (600) is arranged in an area (422) that extends orthogonally from the touch area (400).

3. The aerosol generation device (100) of any one of the preceding claims, wherein the through area of the light guide (600) has a size between 100% and 600% preferably between 100% and 300% of the size of the surface of the LED (500) directed towards the light guide (600).

4. The aerosol generation device (100) of any one of the preceding claims, wherein the LED (500) is not visible through the translucent or preferably transparent portion (412) when the LED (500) is not emitting light.

5. The aerosol generation device (100) of any one of the preceding claims, wherein the LED (500) is configured to emit light in response to a touch input of the user on the touch area (400).

6. The aerosol generation device (100) of any one of the preceding claims, wherein the touch area (400) is arranged in the main housing (300).

7. The aerosol generation device (100) of any one of the preceding claims, wherein at least a portion of or preferably substantially the entire light guide (600) is arranged perpendicular to the capacitive layer (410).

8. The aerosol generation device (100) of any one of the preceding claims, wherein the light guide (600) is arranged such that a portion (610) of the light guide is arranged in the area (422) that extends orthogonally from the translucent or preferably transparent portion (412) of the capacitive layer (410); and a portion (620) of the light guide (600) is arranged in an area (423) that extends orthogonally from an opaque portion (413) of the capacitive layer (410).

9. The aerosol generation device (100) of claim 8, wherein the portion (610) of the light guide (600) which is arranged, in the area (422) that extends orthogonally from the translucent or preferably transparent portion (412) is arranged in parallel to the capacitive layer (410).

10. The aerosol generation device (100) of any one of the preceding claims, wherein the capacitive layer (410) comprises engraved portions (800) for collecting light passing through the capacitive layer (410).

11. The aerosol generation device (100) of any one of the preceding claims, comprising multiple LEDs (500) with corresponding one or more multiple light guides (600).

12. The aerosol generation device (100) of any one of the preceding claims, wherein opaque portions (413) are provided in the touch area (400).

13. The aerosol generation device (100) of any one of the preceding claims, wherein the touch area has a layered structure comprising an outer layer (430) and the capacitive layer (410), wherein the light guide (600) is configured to direct the light from the LED to the capacitive layer (410).

14. The aerosol generation device (100) of the preceding claim,
wherein the outer layer (430) which is translucent or preferably transparent to light;
wherein preferably an opaque silkscreened layer is arranged in the touch area (400) to create the opaque portions (413) in the touch area (400).

15. The aerosol generation device (100) of any of the preceding claims, wherein the light guide (600) is arranged such that it extends through the capacitive layer (410), or preferably extends through the capacitive layer (410) and the outer layer (430).
